# EUROPEAN PATENT SPECIFICATION

(11) **EP 1 134 502 B1**
(45) Date of publication and mention of the grant of the patent: **24.11.2004**
(21) Application number: 01200957.7
(22) Date of filing: 14.03.2001
(51) Int. Cl.: F24D 3/14, E01C 11/26

(54) **System for fixing tubes, hoses or other conduits in a road surface**
System für die Befestigung von Röhren, Schlangen oder anderen Leitungen in Strassendecken
Systéme pour monter tubes, tuyaux ou autres conduites dans une surface d'une chaussée

(30) Priority: 14.03.2000 NL 1014645; 21.07.2000 NL 1015781
(43) Date of publication of application: 19.09.2001
(73) Proprietor: Ooms Avenhorn Holding B.V., 1633 ZG Avenhorn (NL)
(72) Inventor: Van Rij, Hans, 3132 XR Vlaardingen (NL); Ooms, Jan Dirk, 1689 EN Zwaag (NL); De Bondt, Adriaan Hermann, 3434 ST Nieuwegein (NL); Jansen, Rob, 3137 AM Vlaardingen (NL)
(74) Representative: van Westenbrugge, Andries

(56) References cited:
- EP-A- 0 666 443
- DE-A- 3 204 985
- DE-A- 3 513 971
- DE-U- 8 117 704
- DE-U- 29 704 909
- FR-A- 2 293 675
- FR-A- 2 344 687
- FR-A- 2 618 212
- PATENT ABSTRACTS OF JAPAN vol. 1997, no. 05, 30 May 1997 (1997-05-30) & JP 09 014541 A (COSMO KOKI CO LTD), 17 January 1997 (1997-01-17)

## Description

The invention relates to a system for fixing hoses, tubes or other conduits or elongated elements on a foundation onto which still a layer of material has to be applied, which system comprises a number of elements which in the operational situation extend over a predetermined distance upwards, which elements are made of a material which is shaped into strips and which elements comprise openings or excavations which in the operational situation will receive a part of a hose, tube, conduit or other elongated element and will fix said part approximately parallel to the foundation

Systems of the above-mentioned type are for instance described in FR-2293675, FR-2344687, DE-3513971, and FR-2618212.

FR-2293675 describes an embodiment whereby the strips are combined into a rectangular lattice so that each of the elongated elements is at regular intervals inserted into an opening or excavation of a rib and supported by said rib.

FR-2344687 describes an embodiment whereby rather voluminous ribs are used. Also these ribs can be combined into lattices for providing support over a larger surface.

DE-3513971 provides a solution whereby the strips are bended such that Omega-shaped forms are obtained, each of which can be used for inserting a tube or other elongated element.

A rather different embodiment is described in FR-2618212 in which elongated U-shaped elements are used, whereby excavations or openings are made in the upstanding legs of said U-shaped element.

A problem with the rather thin ribs as for instance used in FR-2293675 is that in many cases they do not provide sufficient stability. As soon as the elongated elements are combined with the strip-shaped material into larger devices which can be positioned directly onto the foundation the road surface material has to be spread over the system. For pouring asphalt nowadays relatively large machines are used which spread out the asphalt over the width of one or even two lanes on the foundation such that over the whole width an equal layer of hot granular asphalt is applied. Directly afterwards the said hot and non-consistent layer is pressed by means of a roller so that a consistent layer is formed.

If preceding said process conduits or hoses are applied on the foundation without further protecting measures and asphalt is poured thereon and rolled, then these conduits have to be resistant against the relatively large weights of the pouring machines and the rollers. That is not always the case.

Furthermore it is not always possible to apply the hoses etcetera on the foundation such that these hoses will stay horizontal. In general synthetic hoses, which are supplied on a reel, have the tendency to warp after being unwound from the reel and will certainly not stay flat on the foundation under all circumstances.

An object of the invention is now to provide means on the basis of the above-mentioned existing technology for eliminating the above-mentioned disadvantages.

In agreement with said object the invention now provides a system of the type described in the first paragraph which according to the invention is characterized in that the thickness of the strips is increased around the edges of said openings or excavations.

The object of the invention is also fulfilled by a system of the type mentioned in the first paragraph, which is characterized in that at least part of the inner wall of at least part of the openings or excavations is non-smooth.

Preferably both above-mentioned characteristics are combined in a system of the type mentioned in the first paragraph which according to the invention is characterized in that the thickness of the strips is increased around the edges of said openings or excavations and that at least part of the inner wall of at least part of the openings or excavations is non-smooth.

It is preferred that a number of combinations can be interconnected into a lattice such that this lattice covers a predetermined surface. In this manner large scale lattices can be created which can be combined first of all with tubes or hoses. For that purpose the lattice is put on its back and the hoses or tubes are pressed into the excavations or openings such that the tube or hose will take a meandering-shaped pattern whereby the ends of the hoses for instance end near an edge of the lattice such that these ends are accessible afterwards.

Thereafter the lattice with the therein fixed hose or tube is turned around and positioned at its location on the foundation. Because the lattice is made of strip-shaped material which in the operating situation extends upwards from the foundation the lattice has an inherent stiffness and also the tube or hose which is fixed in said lattice has no ability to move in any direction and will therefore stay neatly flat on the foundation.

To be able to receive the tubes or hoses easier in the predetermined pattern in said lattice it is preferred that the openings or excavations are made such that at least a part of said openings or excavations is aligned.

In a simple embodiment the system is embodied such that the openings or excavations have in general an inverted U-shaped cross section whereby the height of the opening is at least equal to the width thereof. Such an embodiment is very suited for application with hoses or tubes which can be relatively easy in the desired shape. With rather small tolerances the tube or hose can be fixed in a series of U-shaped openings tight enough to be able to turn the lattice around without the tube or hose falling out and to install the lattice at its right location. Is the height of the opening exactly equal to the width thereof then in the operating situation the tube will rest onto the foundation. Sometimes it is desired to apply an intermediate layer onto the foundation onto which finally the lattice with the hoses has to be installed. In such a case it is often more useful to select the height of the opening somewhat larger than the width thereof. It is, however, completely dependent on the application.

When used in combination with hoses or tubes made of a more unmanageable material it may be useful to embody the system such that the openings or excavations have an Omega-shaped cross section with at both sides at short distance thereof two saw cuts having such a length that they extend at least to the widest part of the Omega shape and preferably up to the upper side of the Omega shape. Openings or excavations with an Omega shape have an access opening which is smaller than the diameter of the hose or tube which has to be inserted into said Omega shape. Such a shape of the opening is only possible if hoses or tubes of a somewhat flexible material are applied.

If hoses or tubes from a stiffer material are applied, then it is preferred that the legs of the Omega shape as a result of the saw cuts at both sides can be bent resiliently outwards, so that the hose or tube or other conduit can be inserted into Omega shape.

To fix the tubes or hoses even better and unmoveable in the openings it can be preferred that the openings or excavations, at least at those locations where the wall thereof is in contact with the tube, hose or conduit or similar element, have a toothed, ribbed or similar non-smooth wall.

It will be clear that the application of excavations in the strip-shaped element leads to a weakening of this material. To compensate at least partly it is preferred that around the openings or excavations the strip-shaped material has a larger thickness.

Finally it is remarked that the excavations or openings can be made both at the underside of the elements (whereby the tubes or hoses are laying directly on the foundation) or at the upper side whereby the tubes or hoses in general have some distance to the foundation.
Figure 1 illustrates in two views figure 1a and figure 1b an embodiment of a strip-shaped element by means of which the goal of the invention is fulfilled. Figures 1c and 1d indicate variants which can be applied.
Figure 2 illustrates the application of a number of elements in figure 1 for fixating a number of tubes on a foundation.
Figure 3 illustrates a second embodiment of a system according to the invention, in this case embodied as a lattice-shaped construction from strip-shaped elements.
Figure 4 illustrates a perspective view of a part of the lattice construction according to figure 3 at the location where one of the tubes which is fixed by said lattice construction, makes a turn.
Figure 5 illustrates the application of the invention with a prior art lattice construction.
Figure 6 illustrates the application of the invention also on the basis of another prior art lattice construction.
Figure 7a illustrates the embodiment of upwards directed openings or excavations in the elements whereby the hoses or tubes are not directly resting onto the foundation.
Figure 7b illustrates a further developed embodiment based on figure 7a.
Figures 8a and 8b show in cross section the shape of the transversal ribs.
Figure 9 illustrates an example of a lattice element whereby at two adjacent sides there are sidewalls present whereas at the other two adjacent sides no sidewalls are present.
Figure 10 illustrates an embodiment in which the openings for the tubes, hoses, etcetera, have an Omega shape and are delimited by further openings such that the hoses, tubes, etcetera are in fact clamped in between two legs.

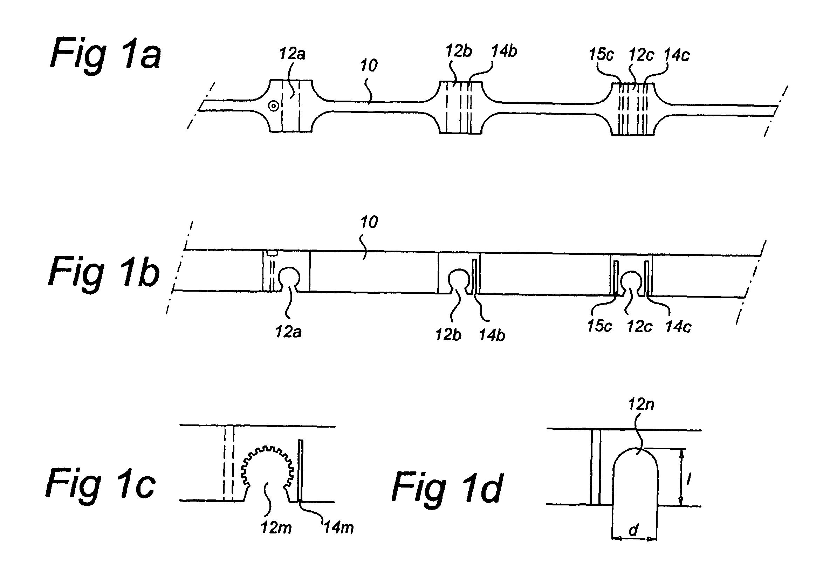

A first embodiment of the system according to the invention is illustrated in figures 1a and 1b. In this embodiment the system is realized as a strip-shaped element 10 comprising a number of Omega-shaped excavations or openings 12a, 12b, 12c, ... In the operating situation these openings are directed to the foundation onto which the strips 10 come to rest. If the strips 10 are meant for fixing hoses made of a relatively flexible material which can be pressed relatively easy into the Omega-shaped openings, then the "bare" embodiment 12a of figures 1a is sufficient to fulfil the object. However, if the strips are applied with tubes or hoses of a relatively stiff material, then it may be necessary to make adjacent to the Omega-shaped excavation a saw cut as is illustrated with the saw cut 14b adjacent to the opening 12b. This saw cut 14b takes care that the right-hand wall of the Omega-shaped opening 12b in this figure can bend somewhat so that space is provided for inserting a more stiff tube. If necessary at both sides of the Omega-shaped opening a saw cut can be made such as the saw cuts 14c and 15c, adjacent to the opening 12c. In this case both sidewalls of the Omega-shaped opening are able to bend away somewhat for inserting the tube, hose or other conduit.

As is shown in the upper view of figure 1a it is preferred to provide the strip 10 near the openings 12a, 12b, 12c with a larger thickness to compensate for the weakening which is in fact caused by making the openings 12a, 12b, 12c. The degree of thickening is dependent on the application. Not only a compensation is obtained for the decreased strength but furthermore a sidewards bulging is created which causes an increasing stability of the strip during operation. Thanks to these thicker parts the strip will have less tendency to tilt during the application of the material layer on the foundation, whereby the strip 10 forms the armouring.

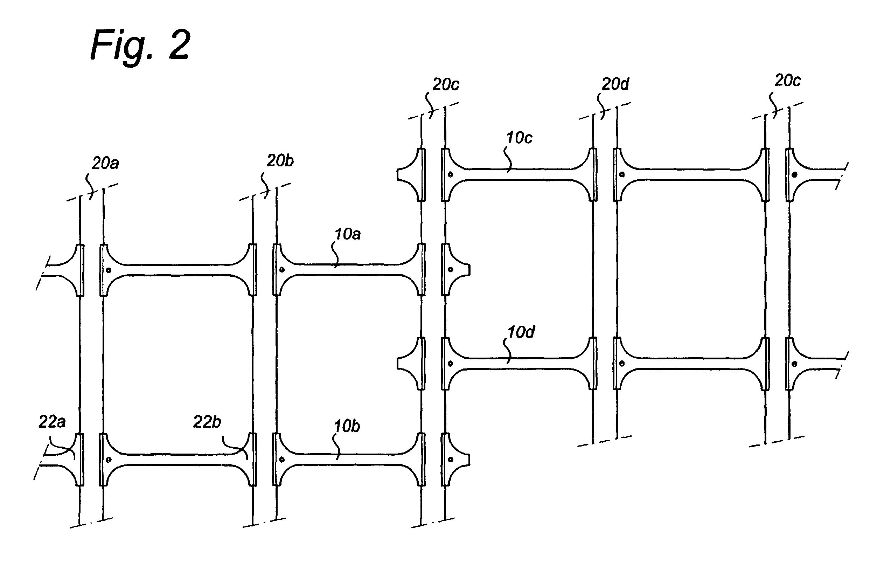

An application of a number of strips for fixing a number of conduits is illustrated in figure 2. In figure 2 the conduits 20a, 20b, 20c are fixed at their location by means of the strips 10a and 10b. Using further strips 10c and 10d which with their one end grip the conduit 20c further parallel conduits 20d and 20e can be fixed at their location. All this will be clear without a further detailed elucidation of figure 2. Although it is not always necessary it may be useful to fix the strips for instance by some nails or tags or similar elements to the foundation. Thereto especially near the thicker parts the openings 22a, 22b are formed.

In figure 1c it is indicated that the Omega-shaped openings may have an inner ribbed or toothed surface. In case this surface consists of a somewhat resilient material then such a ribbed or toothed surface can be used to get a better grip on a round hose or tube. There are hoses or tubes which have a lengthwise ribbed surface. If the pattern of the ribs on the wall of the Omega-shaped opening is adapted thereto, then it will be clear that when such a tube or hose with ribbed outer surface is applied a very good fixation can be realized. The use of such hoses in the upper layer of a road surface is as such described in US-5233971. However, nothing is said in said publication about armouring the road surface or about fixation of hoses as such.

In figure 1c one single saw cut 14m is made near the opening 12m but it will be clear that also at the other side a similar saw cut can be realized.

The excavation or opening does not have to Omega-shaped per se. Also a usual inverted U-shaped opening can be very functional as is indicated in figure 1d. Preferably the diameter d of the opening 12m is at least equal to the height thereof. However, in some applications it may be preferable to select the height somewhat larger than the height d.

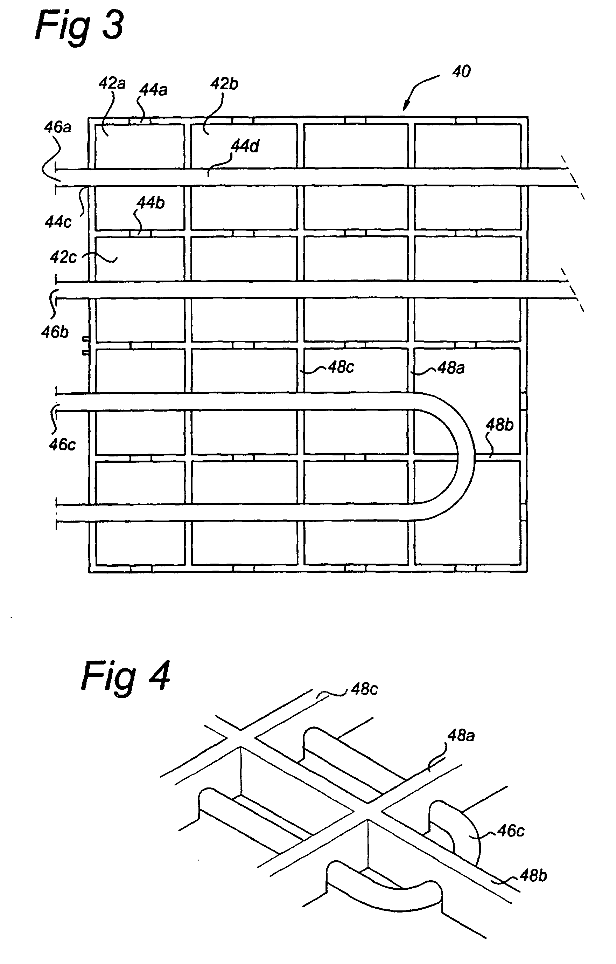

In the figures 3 and 4 a second embodiment of a system according to the invention is illustrated. In figure 4 a partial view in perspective is illustrated whereas in figure 3 a cross section through a lattice is illustrated near the tubes which are fixed by this lattice.

The lattice 40 comprises in this embodiment strip-shaped ribs which in this case define 4 x 4 lattice openings. The part of the ribs which delimit a lattice opening do have also excavations in which tubes, hoses or other conduits can be fixed. The ribs which delimit the lattice opening 42a do have for instance the openings or excavations 44a, 44b, 44c, and 44d. These openings or excavations may have an Omega-shaped or inverted U-shaped embodiment just as in the afore-mentioned example. By means of this lattice 40 the tubes 46a, 46b, 46c are fixed. The tubes 46a and 46b extend rectilinear through the lattice and are fixed each time by means of each of the crossing ribs. The tube 46c is bent in the right-hand lower corner of the lattice and extends through a further section of the lattice back to the left. This bend is illustrated in more detail in figure 4.

Without being shown in the figures also in this embodiment in many cases it is preferred that the thickness of the ribs is somewhat larger near the openings 44x. Therewith a compensation is provided for the weakening which in fact is caused by the making of the excavations or openings 44x.

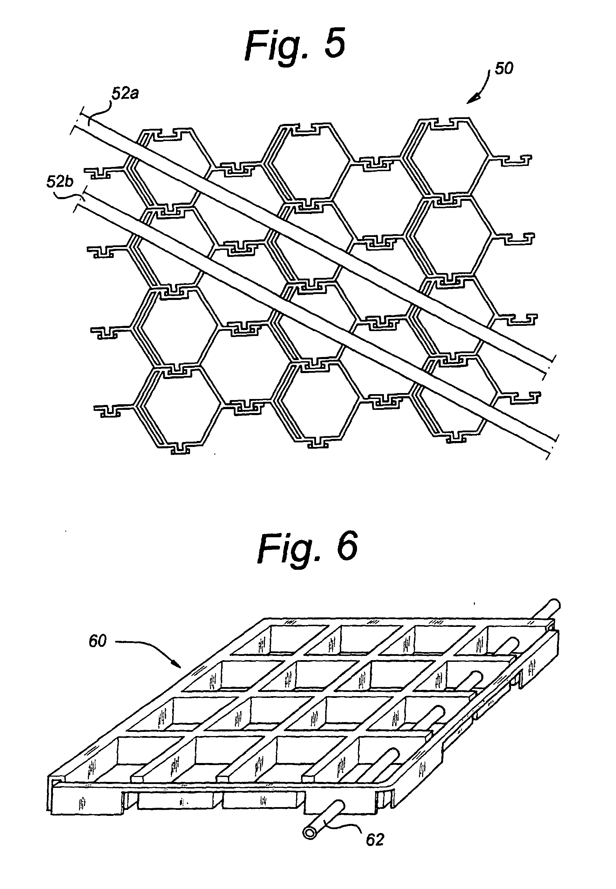

The invention can be applied in many cases if one starts with armouring constructions which are known as such and of which a number is mentioned already in the introductory part to the description. An example is provided in figure 5 of which the construction is already known from figure 4 of EP-0808947. The lattice structure is built from sections which are snapped into each other such that a lattice of the desired extent is constructed. If these parts are now modified by making openings or excavations in the way illustrated in figure 5, then therewith one or more tubes, hoses or other conduits can be fixed at a location in a similar manner as above illustrated with reference to the figures 1 until 4. In figure 5 in this way two rectangular extending tubes 52a and 52b are fixed at their locations. It will be clear that also in this embodiment by applying further openings or excavations constructions are possible whereby a tube for instance is fixed in a meandering pattern in the lattice.

Another example of a prior art lattice which in the inventive manner can be applied with additional excavations or openings for fixing tubes, hoses, etcetera, is illustrated in figure 6. In this figure a part is illustrated of the construction which is described in the German Auslegeschrift DE-1197109. Therein a lattice construction with rectangular openings and walls made of a strip-shaped material is described whereby the walls are embodies hollow. For details the attention is drawn to the respective Auslegeschrift. In figure 6 a respective lattice, now comprising a number of openings for fixing a tube at its location. It will be clear that more openings can be made such that in both lattice directions a tube can be fixed in a similar manner as illustrated in figure 3.

Up to now examples are discussed of a system whereby the tubes, hoses or other conduits in the operational situation of the system rest onto the foundation and are fixed on the foundation by said system. If, after positioning of the device and the tubes, hoses or other conduits the layer of additional material is applied, then this additional material layer will have a significant thickness above the tubes. For some applications that is preferred, however, there are applications where the thickness of the material above the tubes, hoses, etcetera has to be relatively small and whereby it is preferred that the tubes and hoses are positioned directly underneath the surface of the material layer to be applied. For those applications in principle the same systems can be used as described before with the difference that these systems now come to rest on top of the foundation whereby the excavations or openings are directed upwards. Also from the standpoint of installing, embodiments with upwards directed openings or excavations could have preference.

The tubes, hoses or other conduits, which in the last mentioned embodiment are fixed into the openings or excavations will, dependent on the flexibility of the material, show a tendency to move downwards in the direction of the foundation between the various openings. In certain applications that is not allowable and in other applications it is.

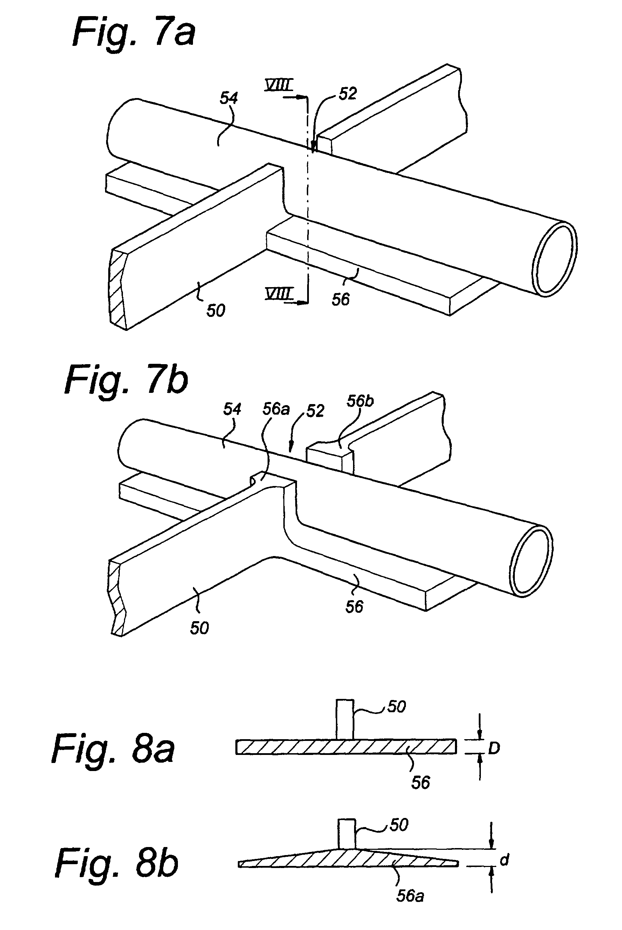

To avoid this sagging of tubes, hoses, etcetera, it is preferred to attach transversal ribs to each of the elements near the openings or excavations. A first example thereof is illustrated in figure 7a. In this figure element 50 is illustrated wherein an excavation 52 is made, which excavation in the operational situation is directed upwards. In this excavation the tube 54 is inserted and underneath said tube at both sides of the element 50 a transversal rib 56 is installed. The thickness of the transversal rib 56 (i.e., the dimension from the foundation upwards) is such that in the operational situation the tube 54 will rest on the rib 56 so that sagging of the tube 54 at least over the full length of this rib 56 is prevented. It is preferred that the length of this rib 56 (the dimension perpendicular to the tube 54) is such that the intermediate distance between transversal ribs, which are extending in the same length direction mutually aligned, is small enough to prevent sagging across this intermediate distance at least partly.

To prevent sagging as a whole it is preferable that the length of the ribs equals half the intermediate distance between the elements 50, in other words, that the transversal ribs extend integral between the adjacent elements 50. This last solution, however, is not always favourable because in that case there is no space left underneath the tube 54. The presence of any space underneath the tube 54 can be useful to enable to further layer of material to flow in every corner of the construction so that a proper consistent material layer without air inclusions will be obtained.

It will be clear that also in this embodiment with upwards directed openings or excavations said openings or excavations can be embodied as for instance is illustrated in figures 1a, 1b, and 1c. As example thereof figure 7b illustrates an embodiment in which the thickness of the element near an excavation is enlarged in the same way as schematically illustrated in figure 1a. The enlarged sections of element 50 are indicated by 56a and 56b. It will be clear that thanks to these thickened parts the tube 54 is better maintained better at its position. Preferably the thickened sections 56a and 56b are embodied such that they fluently transfer into the transversal ribs 56.

If a certain degree of slag of the tubes, hoses or other conduits is allowed then it still is preferable to realize the transversal ribs such that the thickness of these transfersal ribs is decreasing with increasing distance to said elements.

Figure 8a illustrates a cross section according to VIII-VIII in figure 7 from which it appears that the thickness D of the transversal element 56 is equal all around. In figure 8b an embodiment of the transversal element is shown of which the thickness d decreases with increasing distance to the element 50. Therewith a proper support of the tube is assured whereas a slight degree of sagging of the tube is allowed.

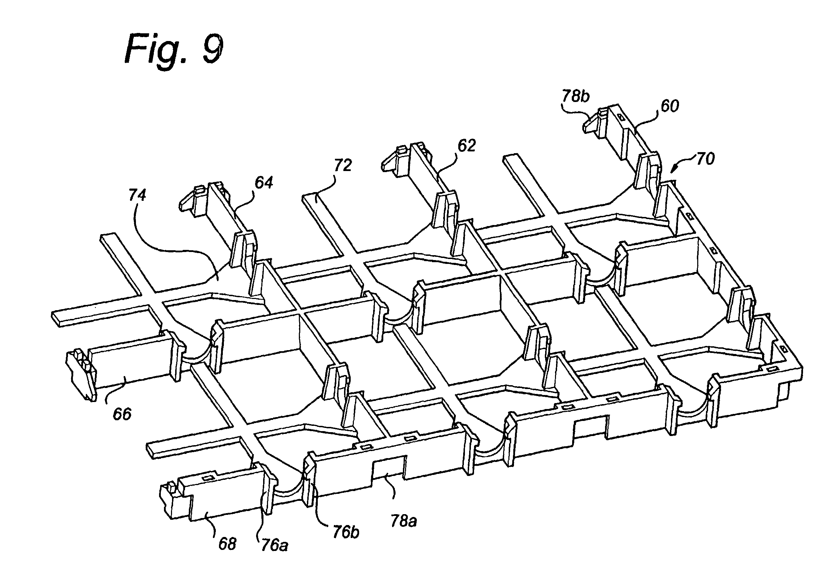

Figure 9 illustrates an embodiment of a lattice-shaped construction part comprising the mutually perpendicular upwards extending ribs 60, 62, and 64 and the transversally extending ribs 66 and 68. In the way which is considered known by now openings are made in these ribs in which pipes, hoses or tubes, etcetera, can be positioned. For the sake of simplicity only one of these openings is indicated by reference number 70. As is extensively discussed with reference to figures 7 and 8 between these upstanding ribs transversal ribs are installed to prevent sagging of the pipes, tubes, etcetera between the upstanding ribs. In this figure one of these transversal ribs is indicated by 72. To compensate the loss of material which is caused in the ribs by applying the openings 70 at least partly the transversal ribs 72 have near the openings approximately triangular shaped broadened sections one of which is indicated by 74 in figure 9.

To take care that the tubes, hoses, etcetera which are inserted into the openings 70 cannot become loose from said openings very easily at both sides of the openings hook-shaped upstanding parts 76a and 76b are installed in figure 9. The inwards extending hook ends of these parts together define a local narrowing of the opening 70, which narrowing, however, thanks to the elasticity of the material from which the ribs 76a, 76b are formed, can be enlarged at least temporarily during the insertion of a pipe, tube or similar element.

It will be clear for the expert in this field that the yielding action of the hook-shaped elements can be increased by making a saw cut over at least part of the height between the actual hook-shaped elements 76a, 76b and the respective rib 68. This can be preferable in case the tubes, hoses, etcetera are made of a non-yielding relatively stiff material, such as a metal. On the other hand these saw cuts will not be necessary in case the tubes, hoses, etcetera are made of a somewhat resilient material, such as a rubber, a synthetic material, etcetera.

The embodiment which is shown in figure 9 comprises at two adjacent side walls upwards extending ribs, i.e. the ribs 60 and 68. In these ribs coupling elements of the female type are made, one of which is indicated by 78a. At both other adjoining sidewalls there is no rib. Male coupling elements, corresponding with said female coupling elements, are installed at the ends of the ribs 60, 62, and 64 which extend transversely to those sidewalls. In figure 9 one of the male coupling elements is indicated by the reference number 78b. It will be clear that thanks to the presence of the coupling elements, the embodiment of the lattice according to figure 9 is very suited for combining into a larger lattice-shaped mat together with the therein positioned tubes, hoses, etcetera, which can be simply positioned on the foundation and at least temporarily fixed by means of nails, staples or rivets or other fastening elements.

Dependent on the fact if one has to deal with secundary roads or with main roads in general one reckons with a lane width of 2.70 meter or 3.60 meter respectively. To be able to apply the lattice-shaped elements with each of those lane widths, it is preferable to make the lattice-shaped elements with a pitch of 90 cm. It is especially preferred to make the lattice-shaped elements as standard parts with outer dimensions of 120 x 90 cm.

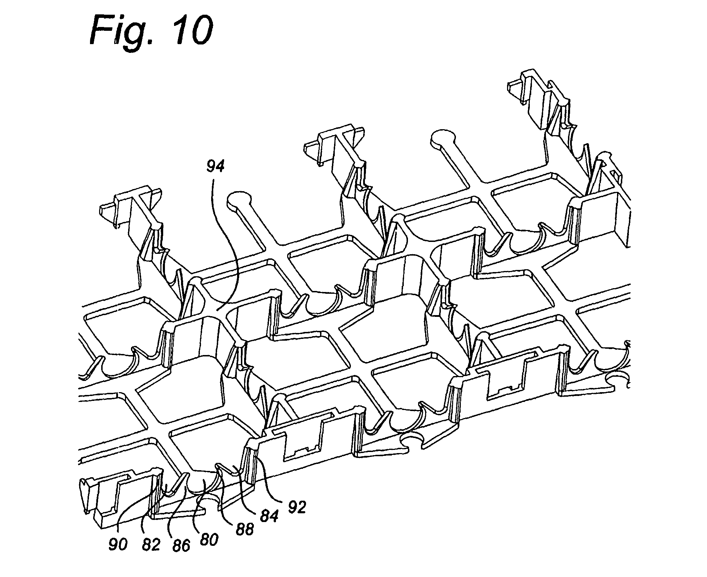

Finally figure 10 illustrates an embodiment whereby the Omega-shaped openings in the strips, destined for receiving tubes, hoses, etcetera, are bounded by further excavations. These further excavations have the effect that the Omega-shaped openings as it were are bounded by two legs which, thanks to the fact that the material of the strips is somewhat resilient, are able to bend outwards during the insertion of the tubes, hoses, etcetera. In figure 10 one of the Omega-shaped openings is indicated by 80. At both sides of this opening 80 further openings 82 and 84 are made so that in fact the legs 86 and 88 are formed. These both legs are extending upwards under a certain angle and are able to bend outwards such that a hose or tube can be pressed easily into the opening 80.

By making these additional excavations 82 and 84 in fact the sections of the strip-shaped ribs which are able to receive the load from above are in fact shortened. To compensate therefore the ends of the strip-shaped section directly adjoining the further excavations 82 and 84 are preferably somewhat thicker. The respective columns are in figure 10 as example indicated by 90 and 92.

A further alteration to the afore-described embodiments concerns the fact that the thickness of the strips near the crossings can be increased somewhat. That will lead as it were to columns at the crossing, one of which is indicated by 94 in figure 10.

## Claims

1. System for fixing hoses, tubes or other conduits or elongated elements on a foundation onto which still a layer of material has to be applied, which system comprises a number of elements which in the operational situation extend over a predetermined distance upwards, which elements are made of a material which is shaped into strips (10) and which elements comprise openings or excavations (12, 44, 52) which in the operational situation will receive a part of a hose, tube, conduit or other elongated element and will fix said part approximately parallel to the foundation, **characterised in that** the thickness of the strips (10) is increased around the edges of said openings or excavations (12, 44, 52).

2. System according to claim 1 **characterized in that** at the location of the openings or excavations (12, 44, 52) transversal ribs (56) are attached to the elements the width of said elements being equal to the distance between the top of the excavation or opening extending from the one edge of the element and the other edge of the element.

3. System according to claim 2, **characterized in that** the thickness of the transversal ribs (56) is at least approximately equal at all places.

4. System according to claim 2, **characterized in that** the thickness of the transversal ribs (56) is decreasing with increasing distance to the element.

5. System according to claim 2, 3 or 4, **characterized in that** the transversal ribs (56) extending from aligned openings or excavations (12, 44, 52) are at least partly interconnected.

## Patentansprüche

1. System, um Schläuche, Röhren oder andere Leitungen oder längliche Elemente auf einer Unterlage zu befestigen, auf der noch eine Materialschicht aufgebracht werden wird, wobei das System eine Anzahl Elemente umfasst, die sich bei Anwendung nach oben über einen festgelegten Abstand erstrecken, wobei die Elemente aus einem Material gemacht sind, welches in Streifen (10) geformt ist und die Elemente Öffnungen oder Aussparungen (12, 44, 52) umfassen, die bei ihrer Verwendung einen Teil eines Schlauches, einer Röhre, einer Leitung oder eines anderen länglichen Elementes aufnehmen und diese Teile nahezu parallel zu der Unterlage fixiert werden, **dadurch gekennzeichnet, dass** die Dicke der Streifen (10) um die Kanten der Öffnungen oder Aussparungen (12, 44, 52) zunimmt.

2. System nach Anspruch 1, **dadurch gekennzeichnet, dass** an dem Ort der Öffnungen oder Aussparungen (12, 44, 52) Querrippen (56) an den Elementen angebracht sind, wobei die Breite der Elemente gleich dem Abstand zwischen der Oberseite der Aussparung oder Öffnung, die sich von einer Kante des Elementes aus erstreckt und der anderen Kante des Elementes ist.

3. System nach Anspruch 2, **dadurch gekennzeichnet, dass** die Dicke der Querrippen (56) zumindest nahezu gleich an allen Stellen ist.

4. System nach Anspruch 2, **dadurch gekennzeichnet, dass** die Dicke der Querrippen (56) mit zunehmender Entfernung zu dem Element abnimmt.

5. System nach Anspruch 2, 3 oder 4, **dadurch gekennzeichnet, dass** die Querrippen (56), die von in einer Linie ausgerichteten Öffnungen oder Aussparungen (12, 44, 52) ausgehen, zumindest teilweise miteinander verbunden sind.

## Revendications

1. Système de fixation de flexibles, de tubes ou d'autres conduits ou éléments allongés sur une fondation sur laquelle doit encore être appliquée une couche de matériau, système qui comprend un nombre d'éléments qui, en situation de fonctionnement, s'étendent sur une distance prédéterminée vers le haut, éléments qui sont réalisés en un matériau qui est façonné en bandes (10) et éléments qui comprennent des ouvertures ou évidements (12, 44, 52) qui, en situation de fonctionnement, recevront une partie d'un flexible, d'un tube, d'un conduit ou autre élément allongé et qui fixera ladite partie environ parallèlement à la fondation, **caractérisé en ce que** l'épaisseur des bandes (10) est augmentée autour des bords desdites ouvertures ou desdits évidements (12, 44, 52).

2. Système selon la revendication 1, **caractérisé en ce que**, à l'endroit des ouvertures ou évidements (12, 44, 52), des nervures transversales (56) sont fixées aux éléments, la largeur desdits éléments étant égale à la distance entre le haut de l'évidement ou de l'ouverture s'étendant d'un bord de l'élément et de l'autre bord de l'élément.

3. Système selon la revendication 2, **caractérisé en ce que** l'épaisseur des nervures transversales (56) est au moins environ égale en tous endroits.

4. Système selon la revendication 2, **caractérisé en ce que** l'épaisseur des nervures transversales (56) diminue au fur et à mesure que la distance par rapport à l'élément augmente.

5. Système selon la revendication 2, 3 ou 4, **caractérisé en ce que** les nervures transversales (56) s'étendant à partir d'ouvertures ou d'évidements (12, 44, 52) alignés sont au moins partiellement interconnectées.
